Europäisches Patentamt

European Patent Office

Office européen des brevets

(11) Publication number: 0 510 279 A1

# EUROPEAN PATENT APPLICATION

(21) Application number: 91309224.3

(22) Date of filing: 08.10.91

(51) Int. Cl.⁵: A01D 34/70

(30) Priority: 26.04.91 GB 9109100

(43) Date of publication of application:
28.10.92 Bulletin 92/44

(84) Designated Contracting States:
BE DE FR GB IT NL SE

(71) Applicant: Black & Decker Inc.
Drummond Plaza Office Park 1423 Kirkwood
Highway
Newark Delaware 19711(US)

(72) Inventor: Bone, Daniel
5 Black Road

Langley Moor, County Durham DH7 8LW(GB)
Inventor: Stones, Kevin
37 Westfield Road
Bishop Auckland County Durham DL14
6AE(GB)
Inventor: Webster, Craig Duncan
Flat 3, 13 Eslington Terrace
Jesmond, Newcastle-upon-Tyne(GB)

(74) Representative: Stagg, Diana Christine et al
Emhart Patents Department Lyn House 39
The Parade
Oadby Leicester LE2 5BB(GB)

(54) Lawn mower.

(57) A lawn mower of the type which in operation is supported by a cushion of air and has a knife 10 rotatable about a vertical axis. The cushion of air is provided by a first air stream produced by a first fan 9 and cut grass is transported into collecting means 22 by a second air stream, produced by a second fan 13. The first and second air streams are provided by first and second fans 9,13 which are preferably driven by the motor 5 which also drives the rotatable knife 10.

This invention relates to a lawn mower, and is particularly concerned with a lawn mower of the type which in operation is supported on a cushion of air and which comprises a motor-driven blade rotatable about a substantially vertical axis and a fan rotatable about the same axis, the blade and fan being surrounded by a hood having one or more inlets for air to form the cushion of air. Such lawn mowers are known as "hover" mowers.

The first hover mowers left the cut grass, normally in a finely divided state, on the ground. Users could then either leave the cut grass on the ground, for example as a mulch, or they could pick the cut grass up in a secondary operation. In due course attempts were made to design mowers of the hover type which picked the grass up as they went along. Examples of such mowers are described in Patent Specifications GB-A-2017475 and EP-B-0037871. In the construction described in the former, cut grass is blown by the air forming the air cushion through an outlet in the hood surrounding the cutting blade and into a grass collecting container attached to the rear of the mower. The efficient operation of this mower requires a specially-shaped hood. In the construction disclosed in Specification EP-B-0037871, the cut grass is effectively sucked up by the air stream which then forms the air cushion on which the mower hovers. Thus, the air stream to the fan wheel forming the hover air cushion, before reaching the fan wheel, is used to pick up cut grass and transport it into a grass collecting chamber in the mower.

A disadvantage of the former type of grass-collecting mower, i.e. that which uses the hover air to blow cut grass into the grass bag, is that the hovering efficiency is very much reduced. A disadvantage of the latter type of mower, i.e. that which uses the air forming the air cushion to suck up cut grass, is that as the grass collecting chamber fills up, it becomes heavier and the filter tends to become blocked. Thus air is prevented from reaching the fan, and the cushion of air cannot be maintained at a level which will enable effective grass cutting.

It is an object of the present invention to provide a lawn mower of the hover type, which collects grass cuttings, in which the above disadvantages are reduced or substantially obviated.

According to the present invention there is provided a lawn mower of the type which in operation is supported by a cushion of air and has a knife rotatable about a vertical axis, wherein said cushion of air is provided by a first air stream produced by a first fan and cut grass is transported into collecting means by a second air stream, produced by a second fan.

The two air streams are produced by two separate fans which may be driven by one or two motors. Thus, separate motors each driving a fan may be used to produce the two air streams, one of the motors also carrying the rotating grass-cutting blade. Alternatively, the two fans may be driven by a single motor.

In a preferred embodiment of the invention, the first and second air streams are created by respective fans mounted on opposite ends of the motor driving the cutting blade.

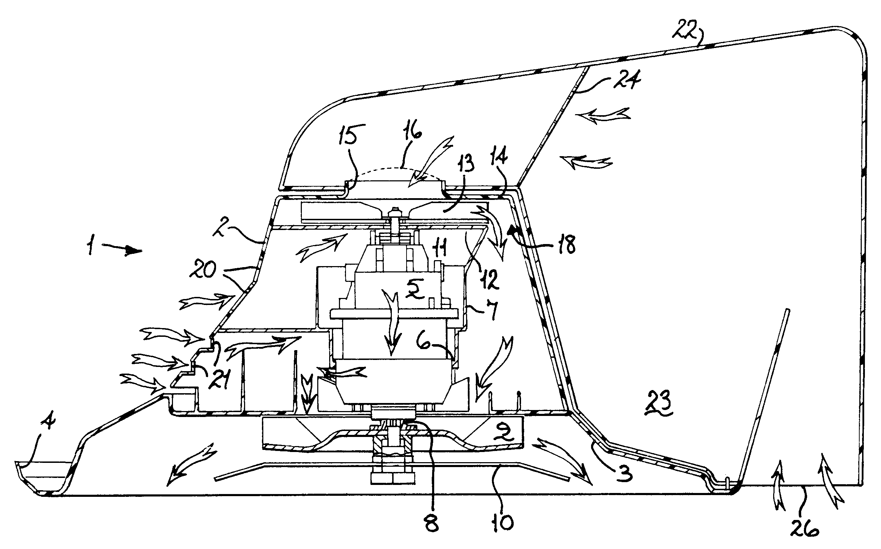

A preferred embodiment of the invention will now be described, with reference to the accompanying drawing, which is a longitudinal vertical section through the mower.

A lawn mower of the hover type comprises a body 1, suitably injection moulded from a thermoplastics material, the body comprising a housing 2 mounted on an outwardly-directed hood 3 terminating in an upwardly-directed peripheral rim 4. An electric motor 5 is seated on an annular flange 6 of a stepped collar 7 attached to the inside wall of housing 2.

Extending from the lower end of motor 5 is an output shaft 8 on which is mounted a fan 9 and a cutting blade 10. The upper end 11 of output shaft 8 extends upwardly from the upper end of motor 5, and penetrates a wall 12 mounted at the upper end of housing 2, and thereabove mounts a second fan 13.

Fan 13 is contained in an open chamber formed by the wall 12 and an apertured cover 14. Cover 14 has a central opening 15, covered by a wire mesh or other air-permeable material 16.

Housing 2 is provided with air inlets 20 and 21.

Mounted on the lawn mower is a grass collecting box 22, comprising a collecting chamber 23 and a filter comprising an apertured plate 24. The front end of the grass box 22 is fitted around the opening 15.

In use, the fans 9 and 13 produce air streams, that produced by fan 9 providing the air cushion on which the mower hovers, and that provided by fan 13 initially sucking the cut grass into the box 22.

More specifically, fan 9 draws air into the housing 2 through air inlets 21, the air then passing into the hood 3 to form the air cushion. Air is also passed into the upper part of housing 2 through air inlets 20, this air passing into the annular air passage between the motor 5 and the collar 7 and through the motor to cool the motor. This motor-cooling air can then join the air entering through the inlets 21 to form the hover cushion.

The fan 13 causes air to enter the grass box 22 through an aperture 26, such air entraining cut grass, leaves and similar debris. Whilst the air passes through filter plate 24, the grass cuttings and leaves cannot do so, and fall back into the collecting chamber 23. The air passing through filter plate 24 then passes through the air-permeable material 16 covering the central opening 15 and into the chamber defined by the cover 14. It then passes through the aperture 18 in the wall 12 and through the housing 2, joining the air entering through the inlets 20 and 21 to form the hover cushion. The wall 12 prevents air which has passed through the filter plate 24, which air may still contain entrained debris, from passing through the motor 5 where any entrained debris might cause damage to the motor 5.

Although the described embodiment shows the preferred construction wherein the two fans are mounted at opposite ends of the drive motor, it would be possible to mount them on the same side, the lower end, through suitable means. It would also be possible to provide two separate motors, one providing the air stream for the hover cushion, and the other providing the air stream initially for sucking the cut grass into the grass box. Preferably, however, a single motor is used for both purposes, and the fans are most preferably mounted at opposite ends of this single motor.

The mowers illustrated will of course be provided with handles and electrical connections, but for the sake of convenience these are not shown.

## Claims

1. A lawn mower of the type which in operation is supported by a cushion of air and has a knife 10 rotatable about a vertical axis, characterised in that said cushion of air is provided by a first air stream produced by a first fan 9 and cut grass is transported into collecting means 22 by a second air stream, produced by a second fan 13.

2. A lawn mower according to claim 1 characterised in that sad first and second air streams are provided by first and second fans 9,13 driven by a motor 5 which also drives the rotatable knife 10.

3. A lawn mower according to claim 2 characterised in that said first and second fans 9,13 are mounted on opposite ends of said motor 5.

4. A lawn mower of the type which in operation is supported by a cushion of air characterised in that it comprises
   a) an electric motor 5 mounting a rotatable knife 10 and a first fan 9 at its lower end and a second fan 13 at its upper end,
   b) a hood 3 surrounding said rotatable knife 10 and said first fan 9 and having at least one aperture 21 allowing ingress of air to said hood 3,

c) a housing 2 surrounding said motor 5 and said second fan 13 and having at least one aperture 26 allowing access of air to said second fan 13, and
d) a grass collecting chamber 22 in communication with said at least one aperture 26 allowing access of air to said second fan 13.

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| E | EP-A-0 481 655 (BLACK & DECKER INC.) <br> * claims 1-3,5; figures * <br> & EP-91309223 (co-pending application) <br> --- | 1-4 | A01D34/70 |
| A | EP-A-0 045 177 (BIRMID QUALCAST LIMITED) <br> * page 1, paragraph 3; figure * <br> --- | 1,4 | |
| A,D | GB-A-2 017 475 (FLYMO SOCIETE ANONYME) <br> * page 1, line 39 - line 64; figure 2 * <br> --- | 1,4 | |
| A | US-A-3 838 558 (D. C. GOODCHILD) <br> * the whole document * <br> --- | 1,4 | |
| A,D | EP-A-0 037 871 (FLYMO LIMITED) <br> --- | | |
| A | GB-A-2 127 665 (J. E. HINDMARCH) <br><br> ----- | | |

TECHNICAL FIELDS
SEARCHED (Int. Cl.5 )

A01D

The present search report has been drawn up for all claims

| Place of search | Date of completion of the search | Examiner |
|---|---|---|
| BERLIN | 30 JUNE 1992 | MERCKX A. |